(19) Europäisches Patentamt

European Patent Office

Office européen des brevets

(11) **EP 0 844 114 B1**

(12) **EUROPÄISCHE PATENTSCHRIFT**

(45) Veröffentlichungstag und Bekanntmachung des Hinweises auf die Patenterteilung:
**09.10.2002   Patentblatt 2002/41**

(51) Int Cl.⁷: $B60G\ 17/015$

(21) Anmeldenummer: **97118393.4**

(22) Anmeldetag: **23.10.1997**

(54) **Niveauregeleinrichtung mit Steuerung der Schwingungsdämpfer des Fahrwerks**

Levelling system with control of the suspension shock absorbers

Régulation de niveau avec commande des amortisseurs de la suspension

(84) Benannte Vertragsstaaten:
**DE FR GB IT**

(30) Priorität: **21.11.1996  DE 19648176**

(43) Veröffentlichungstag der Anmeldung:
**27.05.1998   Patentblatt 1998/22**

(73) Patentinhaber: **WABCO GmbH & Co. OHG**
**30453 Hannover (DE)**

(72) Erfinder:
- **Meier, Jörg**
  **31840 Hess. Oldendorf (DE)**
- **Lentz, Uwe**
  **31535 Neustadt (DE)**

(74) Vertreter: **Schrödter, Manfred, Dipl.-Ing.**
**WABCO GmbH & Co. OHG**
**Postfach 91 12 62**
**30432 Hannover (DE)**

(56) Entgegenhaltungen:
EP-A- 0 262 572          DE-A- 4 105 937
DE-A- 4 243 979          DE-A- 4 430 364
DE-A- 4 447 039

- **SCHÖNFELD K H ET AL: "ELECTRONICALLY CONTROLLED AIR SUSPENSION (ECAS) FOR COMMERCIAL VEHICLES" SAE PAPER, Bd. SP892, Nr. 912671, November 1991 (1991-11), Seite 15-24 XP000292479 Warrendale, US**

**Beschreibung**

Die Erfindung betrifft eine Niveauregeleinrichtung mit Schwingungsdämpfer-Steuerung.

Durch die Firmenschrift

"ESAC - Elektronisch gesteuerte Fahrwerksdämpfung" (WABCO Westinghouse Fahrzeugbremsen, WABCO Standard GmbH; Wabcodruck 826 001 173 3/8.94)

ist eine Niveauregeleinrichtung bekannt.

Die bekannte Schrift zeigt ein System zur adaptiven Dämpferverstellung, bei dem in Abhängigkeit vom aktuellen Fahrzustand die jeweils geeignete Dämpferkennung (weich, mittel, hart) der verstellbaren Stoßdämpfer aktiviert wird. Von der bei ungestörter Fahrt gegebenen weichen, rein komfortorientierten Dämpferkennung wird in eine harte, und damit fahrsichere Dämpferkennung umgeschaltet, wenn z. B. heftige Lenkmanöver einen Anlaß zum Aufschaukeln des Fahrzeugs geben. Eine straffere Dämpferkennung wird auch aktiviert, wenn Fahrbahnunebenheiten den Fahrzeugaufbau zu starken Bewegungen anregen. Durch die Stoßdämpferverstellung wird außerdem ein störendes Anfahraufbäumen oder ein Bremsnicken von Fahrzeugen mit kurzem Radstand stark vermindert.

Die Umschaltung in eine straffere Dämpferkennung erfolgt, wenn Störungen der o. g. Art auf das Fahrzeug einwirken. Solche, als Folge einer entsprechenden Fahrzeugreaktion, ausgelösten Störungen werden von der Elektronik anhand der Sensor-Signale für die Federwege "vorn", "hinten links" und "hinten rechts" erkannt.

Mit der Sensierung des Federweges an drei Meßpunkten wird die Bewegung des Fahrzeug-Aufbaus ermittelt. Aus der Aufbaubewegung wird dann ein für den aktuellen Fahrzustand maßgeblicher Aufbaudämpfungsbedarf ermittelt, und dieser Aufbaudämpfungsbedarf bestimmt die Wahl der geeigneten Dämpferkennung.

Wie erwähnt, werden auch bei Fahrbahnunebenheiten, d. h. bei schlechtem Straßenzustand, die Dämpfer verhärtet, wenn der Fahrzeugaufbau entsprechend angeregt ist. Bei verhärtetem Dämpfer wird aber auch die Entkopplung von Achse und Fahrzeugaufbau verringert, Stöße werden dadurch geringer gefiltert, wodurch der Komfort ebenfalls reduziert ist. Dies ist besonders dann gegeben, wenn langwellige Anregungen zur Dämpferverhärtung führen, denen aber auch kurzwellige Anteile überlagert sind.

Das "SAE-Paper Nr. 912671" "Electronically Controlled Air Suspension (ECAS) for Commercial Vehicles" [November 1991] beschreibt die Funktionen der ECAS-LuftfederNiveauregelsystems für verschiedene Fahrzeug-Konfigurationen mit ihren Komponenten und Vorteilen gegenüber einem konventionellen Luftfedersystem. Dieses System kann auch zu einer semi-aktiven Luftfedersteuerung erweitert werden, indem die Dämpfersteuerung mit integriert wird. Eine derartige Erweiterung ist schon deshalb vorteilhaft, weil bereits eine Reihe von Signalen für die Dämpfersteuerung (z. B. das Höhensignal und seine Ableitungen) bereits im ECAS-System vorhanden sind.

Ausgehend von dem klassischen Konflikt zwischen Komfort und Fahreigenschaften bei der Dämpfersteuerung wird, wann immer dies möglich ist eine weiche Dämpfer-Charakteristik eingestellt, wobei die Dämpfer jedoch bei entsprechenden Fahrmanövern, welche automatisch erkannt werden, verhärtet werden - hierzu ist eine schnelle Reaktionszeit erforderlich, wofür eine Reihe von Parametern herangezogen werden, wie z. B. die vertikale Beschleunigung des Fahrzeugaufbaus, welche durch die Auslenkung und ihre Ableitungen bestimmt ist, die Frequenz der Anregung, der Rollwinkel gegenüberliegender Höhensensoren, der Lenkwinkel und seine Ableitung und die Verzögerung des Fahrzeugs.

Aus der DE 44 47 039 A1 ist eine Aufhängungssteuervorrichtung bekannt, die einen Stoßdämpfer mit variablem Dämpfungskoeffizienten aufweist, der zwischen der gefederten und der ungefederten Masse eines Fahrzeugs angeordnet ist, und bei der ein Betätigungsglied zum Festlegen und Einstellen des Dämpfungskoeffizienten des Stoßdämpfers unter Verwendung eines Steuersignals vorgesehen ist. Die Dämpfereinstellung erfolgt auf der Grundlage der absoluten Aufwärts- und Abwärtsgeschwindigkeiten, die erfaßt und ausgewertet werden, um das Stoßdämpfer-Steuersignal zu erzeugen.

Verschiedene Ausführungsformen der Aufhängungssteuervorrichtung sind erläutert. Die absoluten Aufwärts- und Abwärtsgeschwindigkeiten werden durch Integration des Meßwertes eines Beschleunigungssensors ermittelt. Der Straßenoberflächenzustand kann einmal ebenfalls aus den Meßwerten dieses Beschleunigungssensors oder durch Differentiation des Meßwertes eines Fahrzeughöhensensors ermittelt werden.

Im Rahmen der Auswertung werden die Aufwärts- und Abwärtsbewegungen gefiltert (Totbandeinstelleinrichtung) und der Straßenoberflächenzustand wird beurteilt, wozu der quadratische Mittelwert der Aufwärts- und Abwärtsbewegungen in einem jüngsten, vorbestimmten Zeitraum gebildet wird; je größer dieser Mittelwert ist, desto schlechter ist der Straßenoberflächenzustand.

Die Stoßdämpfereinstellung, die grundsätzlich und bei guter Straßenoberfläche ausschließlich in Abhängigkeit von den absoluten Aufwärts- und Abwärtsgeschwindigkeiten geschieht, wird zusätzlich in Abhängigkeit vom Straßenoberflächenzustand beeinflußt: Bei einer schlechten Straßenoberfläche wird verhindert, daß die Dämpfungskräfte größer werden als ein gewünschter Wert (Begrenzung der Dämpfungskräfte), was den Fahrkomfort des Fahrzeugs verbessert.

Die EP 0 262 572 A3 offenbart ein Verfahren zur Dämpferkraftverstellung von Kraftfahrzeugen, bei dem für die Verstellung die Ausgangssignale eines Beschleunigungsgebers zugrundegelegt werden. Über eine bestimmte Meßzeit werden die betragsmäßigen Differenzen zweier aufeinanderfolgenden Ausgangssignalwerte von geeignetem zeitlichen Abstand aufsummiert und als Mittelwert ausgegeben; er wird DDK-Wert (Dauerdynamikkennwert) genannt.

Das Niveau des DDK-Wertes stellt ein Maß für den Anregungszustand aus Fahrbahn und Fahrgeschwindigkeit dar; überschreitet der DDK-Wert eine vorgegebene Schwelle, so erfolgt eine Umschaltung in Richtung "hart", während bei Unterschreitung eine Umschaltung in Richtung "weich" erfolgt.

Durch Festlegung weiterer derartiger Schwellen können drei Bereiche, ein Bereich mit komfortabler Dämpferkraft-Einstellung, ein Bereich mit "normaler" Dämpferkraft-Einstellung und ein Bereich mit sportlichstraffer Dämpferkraft-Einstellung festgelegt werden.

Um auch andere Einflußgrößen, die den Anregungszustand beeinflussen, zu berücksichtigen, werden diese Schwellen mit Hilfe dieser Größen, nämlich der Beladung, der Dämpferöltemperatur und der Fahrgeschwindigkeit in bestimmter Weise verändert. Der Erfindung liegt deshalb die Aufgabe zugrunde, eine Niveauregeleinrichtung der eingangs genannten Art so zu verbessern, daß auch bei schlechter Fahrbahnbeschaffenheit unter dem erstrangigen Ziel einer größtmöglichen Fahrsicherheit Einbußen am Komfort nach Möglichkeit vermieden werden.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß bei schlechtem Straßenzustand die Ladegutschonung und der Fahrkomfort verbessert sind, und daß die Belastung sowohl der Dämpfer selbst, als auch die der Dämpferanlenkungen reduziert wird. Ein weiterer Vorteil der Erfindung liegt darin, daß zu ihrer Realisierung keinerlei die Kosten erhöhende zusätzliche Hardware-Komponenten erforderlich sind, da die Maßnahmen durch ein Programm realisiert werden.

Die Erfindung weist den weiteren Vorteil auf, daß sie zur Verwendung von Dämpfern mit kontinuierlich verstellbarer Dämpferkraft geeignet ist.

Die Erfindung hat den Vorteil, daß durch die Ermittlung der Schlechtweg-Kenngröße der Einfluß bestimmter Effekte bei der Wahl der Dämpferkennung pauschal mitberücksichtigt wird, obwohl die Effekte als solche von der vorhandenen Sensorik im Detail nicht ermittelt werden. Hierzu gehören die Achsschwingungen, die bei der Sensierung des Federweges durch die SignalFilterung ausgeblendet werden oder die für die Dämpferbelastung bzw. die Dämpferkräfte verantwortlichen Kolbengeschwindigkeiten der Dämpfer, die aufgrund des erheblichen meßtechnischen Aufwandes nicht erfaßt werden.

Die Erfindung hat den Vorteil, daß die Dämpfer bei schlechtem Straßenzustand, wenn der Fahrzeugaufbau z. B. wegen nur kurzwelliger Fahrbahn-Unebenheiten aufgrund seiner Massenträgheit nicht zu entsprechenden Aufbaubewegungen angeregt wird, die beim St.d.T. den einzigen Anlaß zur Dämpferverhärtung gegeben hätten, bei der Erfindung stätt in eine weiche dennoch in eine härtere Kennung umgeschaltet werden. Die Gefahr des "Achs-Trampelns" wird so vermindert, wodurch sich die Straßenbeanspruchung ebenfalls reduziert. So wird auch die Gefahr einer Unterdämpfung der Achsen vermieden, und die dynamischen Radlastschwankungen werden reduziert, was zur Folge hat, daß die Führungs- und Vortriebseigenschaften der Reifen verbessert werden, und eine erhöhte Fahrsicherheit gegeben ist.

Die Erfindung wird im folgenden anhand eines Ausführungsbeispiels, das in den Zeichnungen dargestellt ist, näher erläutert.

Dabei zeigen:

Fig. 1    Das Blockschaltbild zur Ermittlung eines Gesamtdämpfungsbedarfes,

Fig. 2    ein die Bestimmungen einer Schlechtweg-Kenngröße erläuterndes Zeitdiagramm von zweifach differenzierten Höhen-Istwerten,

Fig. 3a    eine erste Art des durch Veränderung des Aufbaudämpfungsbedarfes durch die Schlechtweg-Kenngröße bestimmten Gesamtdämpfungsbedarfes bei Nichtbeeinflussung großer Aufbaudämpfungsbedarfs-Werte,

Fig. 3b    eine zweite Art des durch Veränderung des Aufbaudämpfungsbedarfes durch die Schlechtweg-Kenngröße bestimmten Gesamtdämpfungsbedarfes bei Begrenzung hoher Aufbaudämpfungsbedarfs-Werte auf einen Festwert.

Die Erfindung bezieht sich auf ein luftgefedertes Fahrzeug, bei dem sich der Fahrzeugaufbau über den Fahrzeugachsen durch Luftfederbälge abstützt. Die Luftmengen in den den Fahrzeugaufbau tragenden Luftfederbälgen bestimmen das Niveau des Fahrzeugaufbaus, nämlich seine Höhe über den Fahrzeugachsen.

Das luftgefederte Fahrzeug ist weiter mit einer elektronischen Niveauhöhenregelung ausgerüstet. Hierzu sind an den Luftfederbälgen Stellventile angeordnet, die aufgrund eines elektrischen Stellsignals die Luftmengen in den ihnen zugeordneten Luftfederbälgen verändern, indem sie die Luftfederbälge belüften oder entlüften. Zur Istwert-Erfassung sind Höhensensoren vorgesehen, die die Ist-Abstände zwischen dem Fahrzeugaufbau und den Fahrzeugachsen ermitteln. Zur Regelung des Fahrzeugaufbau-Niveaus ist ein Elektronik-Regler vorgesehen, dem ein Soll-Abstand vorgegeben ist, dem die Ist-Abstände der Höhensensoren zugeführt werden, und der über die Stellventile die Luftmengen in den Luftfederbälgen beeinflußt.

Bei einer Abweichung vom Soll-Abstand verändert der Elektronik-Regler die Luftmenge in einem bestimmten Luftfederbalg derart, daß der Ist-Abstand an dem ihm zugeordneten Sensor gleich dem vorgegebenen Soll-Abstand wird. Der Elektronik-Regler führt diese Niveauregelung für die einzelnen Luftfederbälge aus; er ist als digitaler Regler mit fester Abtastzeit aufgebaut. Zu den durch die Abtastzeit festgelegten Zeitpunkten wird der Meßwert eines Höhensensors abgetastet und gilt bis zum nächsten Abtast-Zeitpunkt als Ist-Abstand des betreffenden Höhensensors.

Bei einem Fahrzeug mit zwei Fahrzeugachsen sind üblicherweise vier Luftfederbälge vorgesehen; ein Luftfederbalg im Bereich des linken Vorderrades der Vorderachse, ein Luftfederbalg an der Vorderachse "rechts", ein Luftfederbalg an der Hinterachse "links" und ein Luftfederbalg an der Hinterachse "rechts" [wenn an den Rädern der Hinterachse statt eines Luftfederbalges ein Paar von Luftfederbälgen angeordnet ist, so wird dieses für den Zweck dieser Betrachtung logisch als ein Luftfederbalg betrachtet]. Da eine ebene Fläche im Raum durch drei Punkte definiert ist, genügt es zur Niveauregelung der genannten vier Luftfederbälge insgesamt drei Höhensensoren vorzusehen. Üblicherweise sind dies zwei Sensoren an der Hinterachse und ein Sensor an der Vorderachse, wobei die Hinterachsen-Sensoren "links" und "rechts" in der Nähe der Räder angeordnet sind, und sich der Vorderachsen-Sensor etwa in der Mitte der Vorderachse befindet.

Die Schwingungsdämpfer des Fahrzeugs sind verstellbar ausgeführt, indem ihre Dämpfkraft kontinuierlich über ein elektrisches Signal im Sinne einer adaptiven Beeinflussung steuerbar ist. Wie üblich, sind die Schwingungsdämpfer an den Fahrzeugachsen einerseits und am Fahrzeugaufbau andererseits befestigt; für das zweiachsige Fahrzeug sind vier Schwingungsdämpfer für jeweils die Räder "links" und "rechts" an der Vorderachse und "links" und "rechts" an der Hinterachse vorgesehen.

Die bei einem Fahrzeug zu dämpfenden Bewegungen bestehen zum einen aus den relativ hochfrequenten Bewegungen des Rades und zum anderen aus den vergleichsweise niederfrequenten Bewegungen des Fahrzeugaufbaus; für beide Arten der Bewegung besteht daher ein Bedarf für eine Dämpfung, ein Raddämpfungsbedarf und ein Aufbaudämpfungsbedarf. Da, im Gegensatz zum "aktiven Fahrwerk", bei der adaptiven Dämpfkraftverstellung nach der Erfindung nicht die Dämpfung der Radbewegung sondern die Dämpfung der Aufbaubewegung verstellt werden soll, wird der Aufbaudämpfungsbedarf aufgrund der Bewegungen des Fahrzeugaufbaus gegenüber den Fahrzeugachsen ermittelt; es sind dies die Veränderungen der Federwege zwischen Fahrzeugachse und Fahrzeugaufbau.

Diese Federwege stellen zugleich die oben erläuterten Ist-Abstände zwischen Fahrzeugaufbau und Fahrzeugachse dar. Die erläuterten drei Höhensensoren für die Niveauregelung werden daher auch für einen zweiten Zweck als Sensor-Meßwerte für die Bestimmung der Aufbaubewegungen benutzt.

Vor ihrer weiteren Verarbeitung werden die Abtast-Meßwerte der Höhensensoren durch einen Tiefpaß-Filter geeigneter Charakteristik leicht bedämpft, um sowohl die für die Niveauregelung störenden Meßwert-Schwankungen von Abtast-Zeitpunkt zu Abtast-Zeitpunkt aufgrund zufälliger Einflüsse zur reduzieren, als auch die Radschwingungen für die Ermittlung der Aufbaubewegungen zu eliminieren. Auf der Grundlage der gefilterten Höhensensor-Meßwerte, nämlich der gefilterten Ist-Abstände, wird in an sich bekannter Weise das "Wanken" und das "Nicken" des Fahrzeugaufbaus bestimmt; der ermittelte Wankwinkel basiert auf einer Umrechnung der Differenz der Ist-Abstände, die von den Höhensensoren links und rechts an der Hinterachse geliefert werden; der ermittelte Nickwinkel basiert auf der Umrechnung der Ist-Abstands-Differenz zwischen dem Mittelwert der Höhensensoren an der Hinterachse und dem Vorderachsen-Sensor.

Bei der Ermittlung eines Dämpfungsbedarfes spielen sowohl die Amplitude als auch die Frequenz der zu dämpfenden Schwingung eine Rolle; bei Bewegungen des Fahrzeugaufbaus gefährden vor allem niederfrequente Schwingungen die Fahrstabilität und verringern den Fahrkomfort, weshalb diese Anteile mit Vorrang zu dämpfen sind. Durch die Ermittlung von Wankwinkel und Wankfrequenz sowie von Nickwinkel und Nickfrequenz sind die zu dämpfenden Aufbaubewegungen festgelegt.

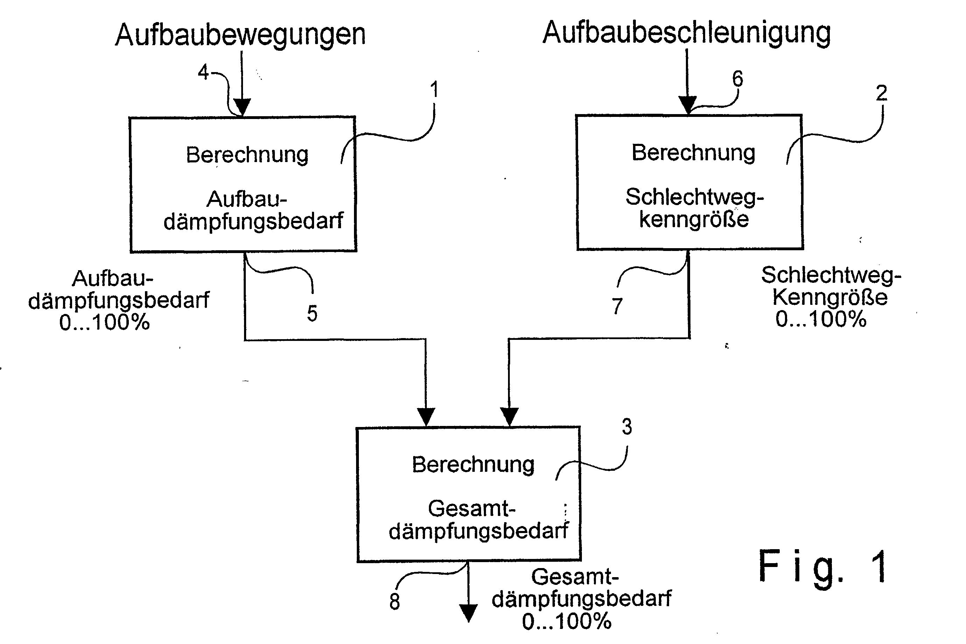

Das Blockschaltbild nach Fig. 1 zeigt drei für die Bestimmung des Dämpfungsbedarfs erforderliche Berechnungsblöcke: Einen ersten Block (1) zur Berechnung des Aufbaudämpfungsbedarfes, einen zweiten Block (2) zur Berechnung der Schlechtweg-Kenngröße und einen dritten Block (3) zur Berechnung des Gesamtdämpfungsbedarfes. Dem Block (1) werden als Eingangsgrößen (4) die oben erläuterten Aufbaubewegungen zugeführt; das Ergebnis der Berechnungen von Block (1) besteht in einer Größe des Aufbaudämpfungsbedarfes, die als prozentuale Maßzahl mit Werten von 0 bis 100 % am Ausgang (5) von Block (1) ausgegeben wird. Die Eingangsgröße von Block (2) besteht aus einer unten erläuterten Aufbaubeschleunigung (6), die Ausgangsgröße (7) von Block (2) besteht aus einer Schlechtweg-Kenngröße mit einer Maßzahl von 0 bis 100 %.

Die Ausgangsgröße (5) von Block (1) und die Ausgangsgröße (7) von Block (2) werden als Eingangsgrößen dem Block (3) zugeführt. Das Ergebnis der Berechnungen nach Block (3) besteht aus einem Gesamtdämpfungsbedarf als Maßzahl von 0 bis 100 %, sie wird als Ausgangsgröße (8) ausgegeben.

Die Bestimmung des Aufbaudämpfungsbedarfes nach Block (1) ist als solche bekannt; die Aufbaubewegungen werden ausgewertet, indem "Wanken" und "Nicken" größenabhängig in Klassen eingeteilt sind, die eine Matrix von Fällen bilden. Die Auswertung dieser Matrix berücksichtigt die Wirkung einer überlagerten Schwingung von "Wanken" und "Nicken" dergestalt, daß z. B. im Falle eines hohen "Wank"-Anteils, der als solcher einen hohen Dämpfungsbedarf nahelegt, ein "Nick"-Anteil mittlerer Größe den Aufbaudämpfungsbedarf über das vom Wanken nahegelegte Maß praktisch nicht mehr erhöht.

Die Maßzahl des Aufbaudämpfungsbedarfes von 0 bis 100 % stellt die Dämpferverhärtung dar, die beim Stand der Technik gegeben ist: Eine Maßzahl von 0 % bedeutet, daß keine Dämpferverhärtung stattfindet, eine Maßzahl von 100 % bedeutet, daß von dem die Dämpferkraft steuernden Elektronik-Regler der spezifi-zierte Maximalwert für die Dämpferkraft-Erhöhung als Stellwert an einen Dämpfer ausgegeben wird.

Die Berechnungen nach Block (2) nach Fig. 1 erfolgen aufgrund der unter (6) als Eingangsgröße vorgegebenen Aufbaubeschleunigung. Unter dem Begriff "Aufbaubeschleunigung" wird die Beschleunigung des Fahrzeugaufbaus verstanden, die er bei der Veränderung der Federwege erfährt; sie wird durch zweifache Differentiation eines Ist-Abstandes gewonnen, wobei der gefilterte Ist-Abstand eines Höhensensors herangezogen wird.

Zu einer exakten Bestimmung der Aufbaubeschleunigung müßten streng genommen die Beschleunigungen der Ist-Abstände aller drei Höhensensoren herangezogen werden, und aus den drei Beschleunigungs-Werten wäre dann in geeigneter Weise ein für den Fahrzeugaufbau geltender Gesamt-Wert zu ermitteln. In der Praxis ist jedoch dieser relativ hohe Aufwand nicht erforderlich und es genügt, nur einen Höhensensor auszuwerten. Grundsätzlich ist es so möglich, an jedem der drei Höhensensoren die Bestimmung der Aufbaubeschleunigung vorzunehmen, jedoch eignet sich besonders der Höhensensor am rechten Hinterrad, da im Bereich des Fahrbahnrandes Fahrbahnunebenheiten üblicherweise verstärkt auftreten; der Ist-Abstand dieses Höhensensors wird daher für die weiteren Berechnungen zugrundegelegt.

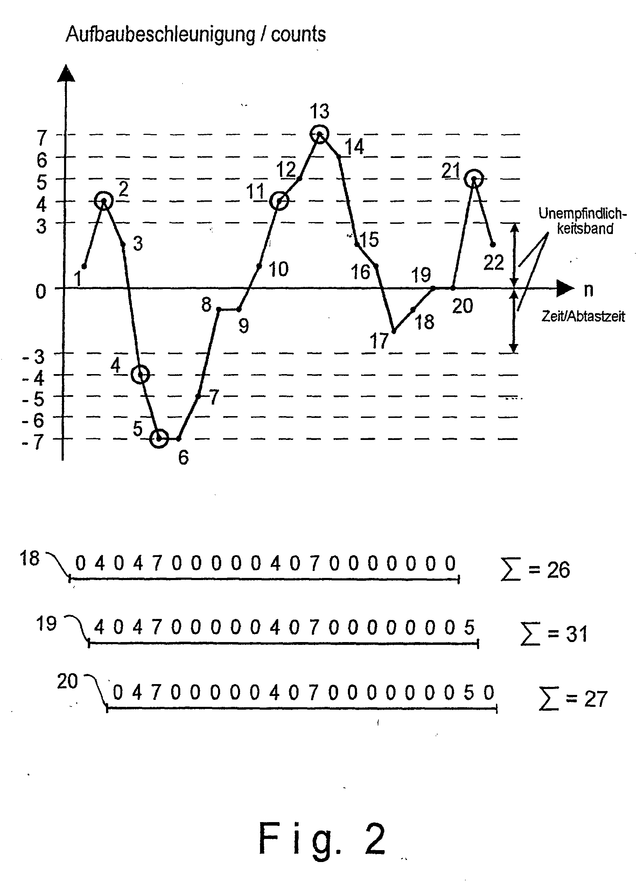

Wie erwähnt, wird die Schlechtweg-Kenngröße aufgrund des Verlaufes der Aufbaubeschleunigung ermittelt, die durch zweifache Differenzierung des Ist-Abstandes am rechten Hinterrad gewonnen wird. Entsprechend dem Abtast-Prinzip erhält man zu jedem Abtast-Zeitpunkt einen bestimmten Wert der Aufbaubeschleunigung, der im Prozessor des Elektronik-Reglers in Form von "counts", d. h. Prozessor-Zähleinheiten angegeben wird. Fig. 2 zeigt beispielhaft ein Zeitdiagramm der Aufbaubeschleunigung mit der auf der Ordinate eingetragenen Aufbaubeschleunigung in "counts" über der Abszissen-Zeitachse mit der "Zeit" als normierter dimensionsloser Zahl n [n als Quotient von Zeit zu Abtastzeit]. Der Übersicht halber ist die "Zeit" n direkt zu den Aufbaubeschleunigungs-Werten [für die Abtast-Zeitpunkte] angeschrieben. Dem Ausführungsbeispiel ist eine Abtastfrequenz von 40 Hz zugrundegelegt, so daß die Zeitdifferenz zwischen einem und dem nächsten Abtast-Zeitpunkt 25 ms beträgt.

Zur Bestimmung der Schlechtweg-Kenngröße werden zunächst aus allen Aufbaubeschleunigungs-Werten diejenigen ausgesucht, die betragsmäßig größer als eine vorgegebene Mindestbeschleunigung sind [erstes Selektionskriterium]; in diesem Beispiel ist die Mindestbeschleunigung zu 3 "counts" festgelegt. Alle positiven Aufbaubeschleunigungen von mehr als 3 "counts" und alle negativen Aufbaubeschleunigungen von kleiner als minus 3 - "counts" werden durch dieses Unempfindlichkeits-Band zunächst ausgewählt.

Von diesen so ausgewählten Beschleunigungs-Meßwerten werden nach einem zweiten Selektionskriterium diejenigen Meßpunkte bestimmt, die sich im Vergleich zum vorhergehenden Meßpunkt um mindestens einen fest vorgegebenen Beschleunigungs-Betrag unterscheiden. In dem Beispiel nach Fig. 2 beträgt der Mindest-Beschleunigungs-Betrag 3 "counts".

Im Zeitdiagramm nach Fig. 2 sind beide Bedingungen für die Beschleunigungs-Meßwerte an den "Zeiten" n = 2, 4, 5, 11, 13, 21 erfüllt; diese Meßwerte sind im Zeitdiagramm mit einem runden Markierungskreis gekennzeichnet.

Die auf diese Weise ausgewählten, zwei un-terschiedlichen Selektionskriterien genügenden Be-schleunigungs-Meßwerte werden in einem Zeitfenster festgelegter Größe addiert; im Beispiel von Fig. 2 beträgt die zeitliche Länge des Fensters n = 20, d. h. das Fenster ist 20 Abtastzeiten lang. Das Zeitfenster ist gleitend ausgebildet, d. h. mit jedem Abtast-Zeitpunkt verschiebt es sich um eine Abtastzeit nach rechts auf der Zeitachse.

Der Verständlichkeit halber sind in Fig. 2 drei direkt aufeinander folgende Zeitfenster (18), (19), (20) eingezeichnet; die diesen Zeitfenstern zugeordneten ausgewählten Beschleunigungs-Meßwerte befinden sich im Zeitdiagramm über dem jeweiligen Zeitfenster. Zeitfenster (18) gilt von der Zeit n = 1 bis zur Zeit n = 20, Zeitfenster (19) gilt von der Zeit n = 1 bis n = 21, Zeitfenster (20) gilt von der Zeit n = 2 bis n = 22. Zur Berechnung der Schlechtweg-Kenngröße für ein Zeitfenster wird zunächst eine für dieses Zeitfenster geltende Summe durch eine Addition der ausgewählten Beschleunigungs-Meßwerte ermittelt. Für Zeitfenster (18) beträgt diese Summe die Zahl 26, für Zeitfenster (19) beträgt sie die Zahl 31 und für Zeitfenster (20) beträgt sie die Zahl 27.

Die Schlechtweg-Kenngröße für ein Zeitfenster ergibt sich durch geeignete Normierung seines Summen-Wertes. Bei dem Ausführungsbeispiel werden zur Normierung die Summen-Werte entsprechend einer 8 bit-Quantisierung durch die Zahl 255, die maximale 8 bit-Zahl, geteilt; die Schlechtweg-Kenngrößen sind da-mit

$$\frac{26}{255} = 10.2 \%$$

für Zeitfenster (9),

$$\frac{31}{255} = 12.2 \%$$

für Zeitfenster (10), und

$$\frac{27}{255} = 10.5 \%$$

für Zeitfenster (11).

Das Zeitdiagramm nach Fig. 2 stellt so ein Beispiel für einen guten Straßenzustand dar.

Wie beschrieben, werden zur Ermittlung der Schlechtweg-Kenngröße die Höhensensoren der Niveauregelanlage benutzt, die über eine für den vorgesehenen Zweck der Niveauregelung dimensionierte Auflösung verfügen. Diese Sensoren sind zudem preisgünstig und sehr robust.

Unter einer Schlechtwegstrecke wird vor allem eine Wegstrecke mit kurzwelligen Fahrbahnunebenheiten, z. B. eine Strecke mit Schlaglöchern, verstanden. Natürlich wird der Fahrzeugaufbau selbst auch bei kurzwelligen Fahrbahnunebenheiten zu Schwingungen angeregt, jedoch werden diese Schwingungen aufgrund ihrer geringen Amplitude von den Niveauregelungs-Höhensehsoren nicht in ausreichendem Maße erkannt. Da eine Direkterfassung dieser Schwingungen mit geringer Amplitude zwar grundsätzlich möglich ist, jedoch aus technischen und Kosten-Gesichtspunkten [teure Sensoren, die einen sensiblen Umgang erfordern] praktisch ausscheidet, kann aufgrund der gemessenen Ist-Abstände der Höhensensoren selbst kein Rückschluß auf die Fahrbahnbeschaffenheit getroffen werden.

Bei der beschriebenen Auswertung bilden die Beschleunigungen der Ist-Abstände den Ausgangspunkt; diese werden in dem gleitenden Zeitfenster summiert, wodurch langwellige Anteile herausfallen; dagegen werden kurzwellige Anteile in einer Art Hochpaß-Bewertung erfaßt, und kurzwellige Anteile deuten ja bei einer entsprechenden Amplitude auf eine schlechte Fahrbahnbeschaffenheit hin. Je "kurzwelliger" und je größer die Anteile sind, desto mehr Beschleunigungs-Meßwerte werden ausgewählt. Anzahl sowie Größe der Anteile bestimmen die Summe der ausgewählten Beschleunigungs-Meßwerte und ergeben proportional zur Summe die Schlechtweg-Kenngröße.

Bei kurzwelligen Fahrbahnunebenheiten treten hohe Dämpfergeschwindigkeiten und als Folge dieser hohen Geschwindigkeiten hohe Dämpferkräfte auf. Eine direkte Erfassung einer dieser beiden Größen ist sowohl technisch sehr problematisch als auch mit hohen Herstellkosten verbunden.

Mit dem erläuterten Verfahren wird eine Schlechtweg-Kenngröße ermittelt, die es gestattet, das Straßenbild zu beurteilen, ohne daß hierzu die meßtechnische Erfassung der Dämpferkraft oder der Dämpfergeschwindigkeit erforderlich ist.

Wie in Fig. 1 gezeigt, werden die Ausgangsgröße (5) von Block (1) und die Ausgangsgröße (7) von Block (2) als Eingangsgrößen dem Block (3) zugeführt. In Block (3) erfolgt die Berechnung eines Gesamtdämpfungsbedarfes, indem der Aufbaudämpfungsbedarf durch die Schlechtweg-Kenngröße verändert wird. Das Ergebnis der Veränderung, der Gesamtdämpfungsbedarf, wird am Ausgang (8) von Block (3) ausgegeben und wird vom Elektronik-Regler als Stellgröße zur Schwingungsdämpfer-Einstellung verwendet.

Die Veränderung bedeutet, daß die Schlechtweg-Kenngröße als Korrekturgröße für den Aufbaudämpfungsbedarf wirkt. Für eine Korrektur des Aufbaudämpfungsbedarfes würde eine Korrektur nach der Dämpferkraft das Optimum darstellen. Da jedoch, wie erwähnt, eine direkte Erfassung von Dämpferkraft oder Dämpfergeschwindigkeit unter vertretbaren Bedingungen ausscheidet, wird die Schlechtweg-Kenngröße als Ersatzgröße für die Dämpferkraft gewählt, da beide Größen insoweit gleichwirkend sind, als hohe Dämpferkräfte bei hohen und niedere Dämpferkräfte bei niederen Schlechtweg-Kenngrößen vorliegen. Eine große Schlechtweg-Kenngröße bedeutet nämlich einen hohen Anteil hochfrequenter Achsschwingungen, und diese haben große Dämpfergeschwindigkeiten und große Dämpferkräfte zur Folge.

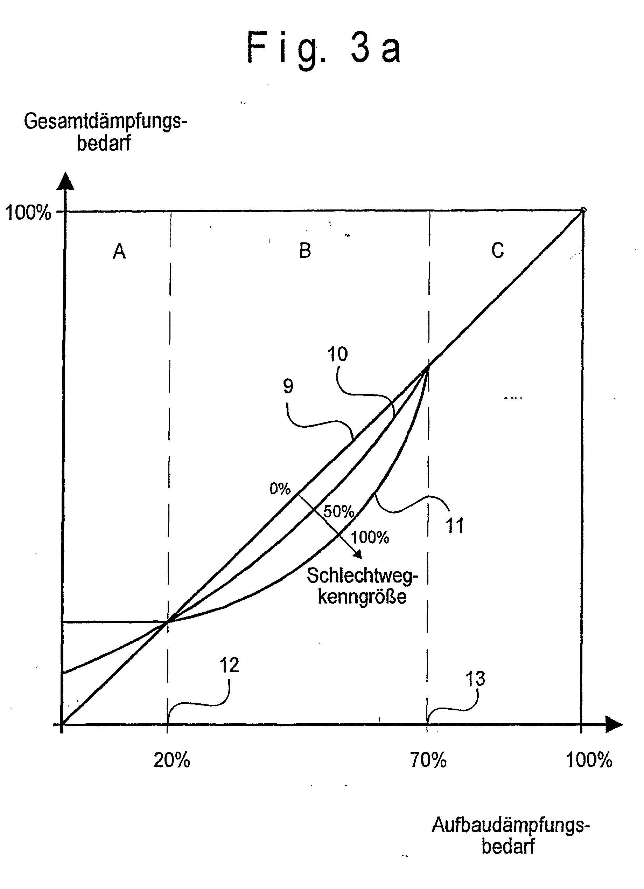

Fig. 3a zeigt die erste Art der Aufbaudämpfungsbedarfs-Änderung zur Ermittlung des Gesamtdämpfungsbedarfes. Auf der Abszisse von Fig. 3a ist als unabhängige Variable die Aufbaudämpfung mit dem Bereich von 0 bis 100 % aufgetragen. Die Ordinate zeigt den berechneten Gesamtdämpfungsbedarf, ebenfalls im Bereich 0 bis 100 %. Es sind drei Kurven (9, 10, 11) angegeben, die die Veränderung des Aufbaudämpfungsbedarfes in Abhängigkeit von der Schlechtweg-Kenngröße als Parameter zeigen: Die Kurve (9) stellt die Funktion des Gesamtdämpfungsbedarfes bei einer Schlechtweg-Kenngröße von 0 %, die Kurve (10) stellt die Funktion des Gesamtdämpfungsbedarfes bei einer Schlechtweg-Kenngröße von 50 %, und Fig. (11) stellt die Funktion des Gesamtdämpfungsbedarfes bei einer Schlechtweg-Kenngröße von 100 % dar.

Die Kurven (9, 10, 11) zeigen eine mit steigender . Schlechtweg-Kenngröße vergrößerte Beeinflussung des Aufbaudämpfungsbedarfes; bei der Kurve (9) ist die Beeinflussung null, bei der Kurve (10) ist die Veränderung durch die 50%- Kenngröße im Vergleich zu der Kurve (9) bereits sehr deutlich, und die Kurve (11) zeigt die maximale Veränderung bei einer Kenngröße von 100 %.

Die Art der Veränderung des Aufbaudämpfungsbedarfes ist auch von der Größe der Aufbaudämpfung selbst abhängig. Es ist daher sinnvoll, verschiedene Bereiche der Aufbaudämpfung vorzusehen, in denen die Veränderung unterschiedlich erfolgt, wobei mindestens zwei Bereiche vorgesehen sind; mit der Anzahl der Bereiche verbessert sich die Variabilität der Dämpfungsbedarfs-Modifizierung, es steigt jedoch ebenfalls der Aufwand, wodurch ein geeigneter Kompromiß zwischen Funktion und Aufwand zu treffen ist. Einen guten Kompromiß stellt die für Fig. 3a gewählte Anzahl von drei Bereichen des Aufbaudämpfungsbedarfes dar.

Zur Definition der Bereiche ist ein unterer Grenzwert $A_U$ (12) und ein oberer Grenzwert $A_O$ (13) vorgesehen. Ein erster unterer Bereich "A" ist für alle Werte des Aufbaudämpfungsbedarfes kleiner dem Grenzwert (12), ein zweiter, mittlerer Bereich "B" ist für alle Werte des Aufbaudämpfungsbedarfes gleich oder größer dem Grenzwert (12) und kleiner dem Grenzwert (13), und ein dritter, oberer Bereich "C" ist für alle Werte des Aufbaudämpfungsbedarfes gleich oder größer dem Grenzwert (13) vorgesehen.

Im unteren Bereich wird die Veränderung des Aufbaudämpfungsbedarfes derart vorgenommen, daß mit steigender Schlechtweg-Kenngröße eine Erhöhung des Gesamtdämpfungsbedarfes erfolgt. In diesem Bereich wird das Fahrzeug [durch den erhöhten Wert des Gesamtdämpfungsbedarfes] über den Dämpfungsbedarf hinaus zusätzlich gedämpft, der aufgrund der Bewegungen des Fahrzeugaufbaus eigentlich zur Dämpfung nötig wäre [Aufbaudämpfungsbedarf]. Eine Schlechtweg-Kenngröße im unteren Bereich zeigt kurzwellige Fahrbahnunebenheiten, z. B. Schlaglöcher, an, die den Fahrzeugaufbau aufgrund seiner vergleichsweise großen Masse noch nicht zu größeren Bewegungen anregen. Bei kurzwelligen Fahrbahnunebenheiten ist die Fahrzeugachse also unterdämpft, wodurch sie zum "Trampeln" neigt. Durch die Schlechtweg-bedingte Erhöhung des Dämpfungsbedarfs im unteren Bereich wird die Unterdämpfung beseitigt; die Reduzierung der Gefahr des "Trampelns" führt gleichzeitig zu einer Verbesserung des Komforts.

Im mittleren Bereich, in dem die Bewegungen des Fahrzeugaufbaus schon stark hervortreten, bewirkt die Schlechtweg-Kenngröße hingegen eine Verringerung des Dämpfungsbedarfes. Eine schlechte Wegstrecke regt hier zu großen Amplituden der Aufbaubewegung an; eine starke Bedämpfung dieser Bewegungen führt zu Stößen, die den Komfort beeinträchtigen. Stöße durch "Überdämpfung" führen zusätzlich zu einer möglichen Beeinträchtigung des Ladegutes, das sich in dem Fahrzeug befindet. Durch die Verringerung des Dämpfungsbedarfes im mittleren Bereich wird also der Komfort und die Ladegutschonung verbessert; außerdem werden die Dämpfer selbst geschont, weil die Dämpfungsarbeit verringert wird.

Im oberen Bereich wird der Aufbaudämpfungsbedarf nicht verändert. Eine Dämpfungsbedarfs-Verringerung wie im mittleren Bereich würde zu einer Amplituden-Vergrößerung der Aufbaubewegung führen, was zu vermeiden ist. In diesem Bereich gelten vor allem konstruktive Sicherheitsaspekte, um Zerstörungen an einem Fahrzeug zu vermeiden. Im Sinne dieses übergeordneten Gesichtspunktes kann der Komfort hier nicht mehr verbessert werden.

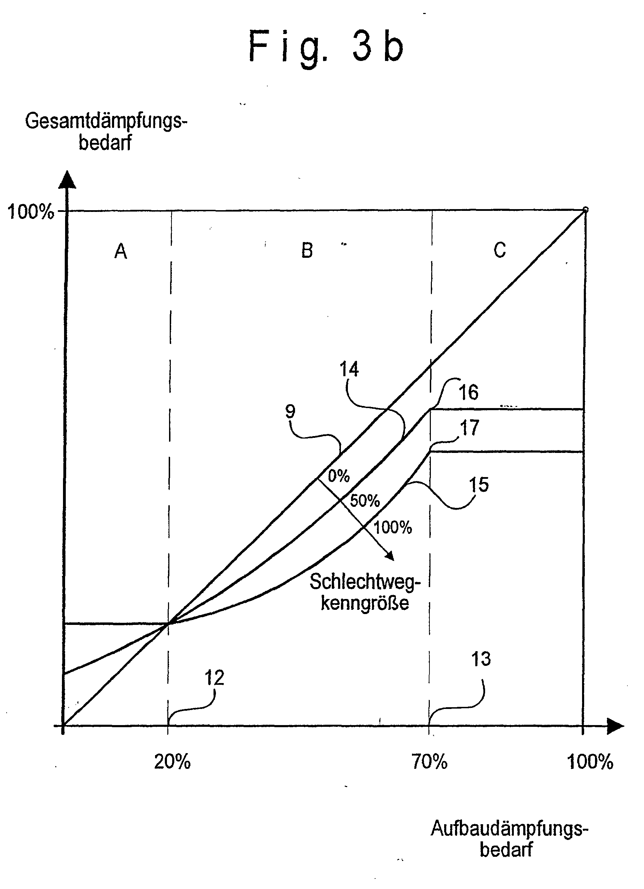

Fig. 3b zeigt die zweite Art der Aufbaudämpfungsbedarfs-Änderung zur Ermittlung des Gesamtdämpfungsbedarfes. Die Art der Darstellung durch Abszisse und Ordinate, die Einteilung in drei Bereiche und der Gesamtdämpfungs-Verlauf für eine Schlechtweg-Kenngröße von 0% sind identisch zu denen in Fig. 3a, weshalb die gleichen Bezugszeichen (9), (12) und (13) verwendet werden, deren Erläuterungen in der Beschreibung zu Fig. 3a enthalten sind. Neu sind in Fig. 3b die Kurve (14), die die Veränderung des Aufbaudämpfungsbedarfes in Abhängigkeit von einer Schlechtweg-Kenngröße von 50 % und die Kurve (15), die die Veränderung des Aufbaudämpfungsbedarfes in Abhängigkeit von einer Schlechtweg-Kenngröße von 100 % zeigt.

Die Änderung des Aufbaudämpfungsbedarfes nach Fig. 3b im unteren Bereich ist identisch zu derjenigen in Fig. 3a. In den mittleren und oberen Bereichen ist jedoch eine andere Art der Veränderung vorgesehen.

Im mittleren Bereich nach Fig. 3b bleibt eine Verringerung des Dämpfungsbedarfs auch bei Annäherung des Aufbaudämpfungsbedarfes an den oberen Grenzwert (13) erhalten, und es findet nicht, wie bei den Kurven (10), (11) nach Fig. 3a bei Annäherung an den oberen Grenzwert (13) eine Erhöhung des Dämpfungsbedarfes dergestalt statt, daß sich die drei Kurven (9, 10, 11) an der Stelle des oberen Grenzwertes (13) schneiden.

Wie erwähnt, bleibt bei den zwei Kurven (14, 15) nach Fig. 3b die Dämpfungsbedarfsreduzierung bei Annäherung an den oberen Grenzwert (13) erhalten, wodurch sich an der Stelle (13) des oberen Grenzwertes die Schnittpunkte (16) bzw. (17) ergeben. Im oberen Bereich wird ein konstanter Gesamtdämpfungsbedarf vorgegeben, der gleich dem Schnittpunkts-Ordinatenwert ist: Bei Kurve (14) ist es der Ordinaten-Wert der Schnittstelle (16), und bei Kurve (15) ist es der Ordinaten-Wert der Schnittstelle (17). Diese Ordinaten-Werte liegen mit deutlichem Abstand unter der Kurve (9).

Im Vergleich zu Fig. 3a ist also in Fig. 3b der Gesamtdämpfungsbedarf bei großen Werten des Aufbaudämpfungsbedarfes [oberer Teil des mittleren Bereiches und gesamter oberer Bereich] reduziert. Diese Reduzierung des Dämpfungsbedarfes wird aufgrund der bereits im Zusammenhang mit den Erläuterungen zu Fig. 3a erwähnten Sicherheitsproblematik vorgenommen. Die zweite Art der Aufbaudämpfungsbedarfs-Veränderung nach Fig. 3b geht über die erste Art entsprechend Fig. 3a dahingehend hinaus, daß in der zweiten Art die Sicherheitsreserven noch erhöht sind. Es soll verhindert werden, daß bei schlechter Wegstrecke mit großen Werten des Aufbaudämpfungsbedarfes überhaupt ein sehr großer Gesamtdämpfungsbedarf vorgegeben wird, um [durch hohe Dämpf-Kräfte] Beschädigungen an den Dämpfern und den Dämpfer-Anlenkungen zu vermeiden. Die zweite Art der Aufbaudämpfungsbedarfs-Veränderung weist daher gegenüber der ersten Art eine erhöhte Sicherheit bei ebenfalls erhöhtem Komfort auf, wobei jedoch eine größere Amplitude der Schwingung des Fahrzeugaufbaus hinzunehmen ist.

**Patentansprüche**

1. Verfahren zur Steuerung von einstellbaren Schwingungsdämpfern eines Fahrwerks mit Niveauregeleinrichtung, wobei das Fahrwerk folgende Elemente aufweist:

   a) Es sind Druckmittelkammern für Luft vorgesehen, die einen Fahrzeugaufbau tragen;

   b) es ist eine Ventileinrichtung vorgesehen, die mit den Druckmittelkammern verbunden ist;

   c) die Ventileinrichtung ist mit einer Druckmittelquelle oder mit einer Druckmittelsenke verbindbar und dient zur Luftmengenveränderung in den Druckmittelkammern;

   d) es sind Sensoren vorgesehen, welche Ist-Abstände zwischen Fahrzeugachsen und dem Fahrzeugaufbau ermitteln;

   e) es ist eine Regeleinrichtung vorgesehen, der frei wählbare Soll-Abstände zwischen den Fahrzeugachsen und dem Fahrzeugaufbau vorgebbar sind und die die Ventileinrichtung in Abhängigkeit von der Regelabweichung, nämlich den Differenzen zwischen den entsprechenden Soll- und Ist-Abständen, steuert, so daß durch Druckveränderungen bzw. durch Veränderung der Luftmengen in den Druckmittelkammern die Ist-Abstände gleich den Soll-Abständen werden;

   f) es sind elektronisch steuerbare Schwingungsdämpfer vorgesehen, die als kontinuierlich verstellbare Schwingungsdämpfer ausgebildet sind;

   g) Es ist eine Einrichtung zur Veränderung der Schwingungsdämpfer-Einstellung vorgesehen;
   wobei das Verfahren folgende Merkmale aufweist:

   h) die Schwingungsdämpfer-Einstellung ist durch den Aufbaudämpfungsbedarf festgelegt, der durch den Zeitverlauf der Ist-Abstände bestimmt ist;

   i) die Veränderung der Schwingungsdämpfer-Einstellung ist durch eine vom Zeitverlauf der Beschleunigung der Ist-Abstände bestimmte Schlechtweg-Kenngröße festgelegt;

   j) für die Veränderung der Schwingungsdämpfer-Einstellung sind mindestens zwei Bereiche des Aufbaudämpfungsbedarfes vorgesehen, wobei drei Bereiche (A), (B), (C) vorgesehen sind;

   k) ein erster, unterer Bereich (A) gilt für alle Werte des Aufbaudämpfungsbedarfes, die kleiner als ein unterer Grenzwert $A_U$ (12) sind;

   1) ein zweiter, mittlerer Bereich (B) gilt für alle Werte des Aufbaudämpfungsbedarfes, die gleich oder größer als der untere Grenzwert $A_U$ (12) und kleiner als ein oberer Grenzwert $A_O$ (13) sind;

   m) ein dritter, oberer Bereich (C) gilt für alle Werte des Aufbaudämpfungsbedarfes, die gleich oder größer als der obere Grenzwert $A_O$ (13) sind;

   n) die Art der Veränderung des Aufbaudämpfungsbedarfes ist von der Größe der Aufbaudämpfung selbst abhängig.

2. Verfahren nach Anspruch 1, **dadurch gekennzeichnet, daß** für die Veränderung im unteren Bereich eine Anhebung (10), (11), (14), (15) und für die Veränderung im mittleren Bereich eine Absenkung (10), (11), (14), (15) des Dämpfungsbedarfes vorgesehen ist.

3. Verfahren nach Anspruch 1 oder 2, **dadurch gekennzeichnet, daß** für den oberen Bereich keine Veränderung (10), (11) des Dämpfungsbedarfs vorgesehen ist.

4. Verfahren nach Anspruch 1 oder 2, **dadurch gekennzeichnet, daß** für den oberen Bereich eine Absenkung (14, 15) des Dämpfungsbedarfs vorgesehen ist.

5. Verfahren nach Anspruch 4, **dadurch gekennzeichnet, daß** der Dämpfungsbedarf für den oberen Bereich durch den Schnittpunkt (16), (17) der Funktion des Dämpfungsbedarfes für den mittleren Bereich mit der Abszisse des oberen Grenzwertes $A_O$ (13) gegeben ist.

6. Verfahren nach einem der Ansprüche 2 bis 5, **dadurch gekennzeichnet, daß** der Grad der Anhebung im unteren bzw. der Grad der Absenkung im mittleren Bereich durch die Schlechtweg-Kenngröße bestimmt ist.

7. Verfahren nach einem der Ansprüche 2 bis 6, **dadurch gekennzeichnet, daß** der untere Grenzwert $A_U$ (12) durch einen Aufbaudämpfungsbedarf von 20 % und der obere Grenzwert $A_O$ (13) durch den Aufbaudämpfungsbedarf von 70 % bestimmt ist.

**Claims**

1. Method for the control of adjustable vibration dampers of a chassis with levelling device, the chassis comprising the following elements:

   a) pressure medium chambers for air are provided, which support a vehicle body;

   b) a valve device is provided, which is connected to the pressure medium chambers;

   c) the valve device is arranged to be connected to a pressure medium source or to a pressure medium sink and serves to alter the volume of air in the pressure medium chambers;

   d) sensors are provided, which detect the actual distances between vehicle axles and the vehicle body;

   e) a control device is provided, in which freely selectable set distances between the vehicle axles and the vehicle body can be pre-set and which controls the valve device in dependence on the control deviation, namely, the differences between the corresponding set and actual distances, so that by changes in pressure or rather by changing the air volumes in the pressure medium chambers the actual distances become the same as the set distances;

   f) electronically controllable vibration dampers are provided, which are in the form of continuously adjustable vibration dampers;

   g) a device for changing the vibration damper setting is provided;
   wherein the method comprises the following features:

   h) the vibration damper setting is fixed by the body-damping requirement, which is determined by the variation in time of the actual distances;

   i) the change in the vibration damper setting is fixed by a poor road characteristic determined by the variation over time of the acceleration of the actual distances;

   j) at least two ranges of body-damping requirement are provided for the change of the vibration damper setting, three ranges (A), (B), (C), being provided;

   k) a first, lower, range (A) applies to all values of the body-damping requirement that are less than a lower limit value $A_u$ (12);

   l) a second, middle, range (B) applies to all values of the body-damping requirement that are the same as or greater than the lower limit value $A_u$ (12) and less than an upper limit value $A_o$ (13);

   m) a third, upper, range (C) applies to all values of the body-damping requirement that are the same as or greater than the upper limit value $A_o$ (13);

   n) the type of change of the body-damping requirement is dependent on the magnitude of the body damping itself.

2. A method according to claim 1, **characterised in that** for the change in the lower range a raising (10), (11), (14), (15) of the damping requirement and for the change in the middle range a lowering (10), (11), (14), (15) of the damping requirement is provided.

3. A method according to claim 1 or 2, **characterised in that** no change (11), (12) in the damping requirement is provided for the upper range.

4. A method according to claim 1 or 2, **characterised in that** a lowering (14), (15) of the damping requirement is provided for the upper range.

5. A method according to claim 4, **characterised in that** the damping requirement for the upper range is given by the intersection point (16), (17) of the function of the damping requirement for the middle range with the abscissa of the upper limit value $A_o$ (13).

6. A method according to any one of claims 2 to 5, **characterised in that** the degree of the rise in the lower range and the degree of the lowering in the middle range is determined by the poor road characteristic.

7. A method according to any one of claims 2 to 6, **characterised in that** the lower limit value $A_u$ (12) is determined by a body-damping requirement of 20% and the upper limit value $A_u$ (13) is determined by the body-damping requirement of 70%.

**Revendications**

1.  Procédé pour commander des amortisseurs réglables de vibrations d'un châssis d'un dispositif de roulement comportant un dispositif de régulation de niveau, le dispositif de roulement comportant les éléments suivants:

    a) il est prévu des chambres de fluide sous pression pour de l'air, qui supportent la superstructure du véhicule;
    b) il est prévu un dispositif à soupapes, qui est relié aux chambres de fluide sous pression;
    c) le dispositif à soupapes peut être relié à une source de fluide sous pression ou à un récepteur de fluide sous pression et sert à modifier la quantité d'air dans les chambres de fluide sous pression;
    d) il est prévu des capteurs qui déterminent les distances réelles entre des essieux du véhicule et la superstructure du véhicule;
    e) il est prévu un dispositif de régulation dans lequel des distances de consigne pouvant être choisies librement entre les essieux du véhicule et la superstructure du véhicule peuvent être prédéterminées et qui commande le dispositif à soupapes en fonction de l'écart de régulation, c'est-à-dire les différences entre la distance de consigne et la distance réelle correspondantes, de sorte que les distances réelles peuvent être rendues égales aux distances de consigne par modification des quantités d'air dans les chambres à fluide sous pression;
    f) il est prévu des amortisseurs de vibrations pouvant être commandés électroniquement et qui sont agencés sous la forme d'amortisseurs de vibrations réglables continûment;
    g) il est prévu un dispositif pour modifier le réglage des amortisseurs de vibrations,
    le procédé présentant les caractéristiques suivantes:
    h) le réglage des amortisseurs de vibrations est fixé par le besoin d'amortissement de la superstructure, qui est déterminé par l'allure dans le temps des distances réelles;
    i) la modification du réglage des amortisseurs de vibrations est fixée par une grandeur caractéristique de ce déplacement déterminée par l'allure dans le temps de l'accélération sur les distances réelles;
    j) pour la modification du réglage des amortisseurs de vibrations il est prévu au moins deux gammes du besoin d'amortissement de la superstructure, et trois gammes (A), (B), (C) sont prévues;
    k) une première gamme inférieure (A) est valable pour toutes les valeurs du besoin d'amortissement de la superstructure, qui sont inférieures à une valeur limite inférieure $A_U$ (12);
    l) une seconde gamme médiane (B) est valable pour toutes les valeurs du besoin d'amortissement de la superstructure, qui sont égales ou supérieures à la valeur limite inférieure $A_U$ (12) et inférieures à une valeur limite supérieure $A_O$ (13);
    m) une troisième gamme supérieure (C) est valable pour toutes les valeurs du besoin d'amortissement de la superstructure, qui sont égales ou supérieures à la valeur limite supérieure $A_O$ (13);
    n) le type de modification du besoin d'amortissement de la superstructure dépend de l'amplitude de l'amortissement lui-même de la superstructure.

2.  Procédé selon la revendication 1, **caractérisé en ce que** pour la modification dans la gamme inférieure, on prévoit un accroissement (10), (11), (14), (15) du besoin d'amortissement et pour la modification dans la gamme médiane, il est prévu une réduction (10), (11), (14), (15) du besoin d'amortissement.

3.  Procédé selon la revendication 1 ou 2, **caractérisé en ce que** pour la gamme supérieure, il n'est prévu aucune modification (10), (11) du besoin d'amortissement.

4.  Procédé selon la revendication 1 ou 2, **caractérisé en ce que** pour la gamme supérieure, il est prévu une réduction (14), (15) du besoin d'amortissement.

5.  Procédé selon la revendication 4, **caractérisé en ce que** le besoin d'amortissement pour la gamme supérieure est déterminé par le point d'intersection (16), (17) de la fonction du besoin d'amortissement pour la gamme médiane avec l'abscisse de la valeur limite supérieure $A_O$ (13).

6.  Procédé selon l'une des revendications 2 à 5, **caractérisé en ce que** le degré d'augmentation dans la gamme inférieure et le degré de réduction dans la gamme médiane sont déterminés par la grandeur caractéristique de trajet de déplacement défavorable.

7.  Procédé selon l'une des revendications 2 à 6, **caractérisé en ce que** la valeur limite inférieure $A_U$ (12) est déterminée par un besoin d'amortissement de la superstructure de 20 % et la valeur limite supérieure $A_O$ (13) est déterminée par le besoin d'amortissement de la superstructure de 70 %.

Aufbaubewegungen                    Aufbaubeschleunigung

4                                   6

Berechnung                          Berechnung
                    1                                   2
Aufbau-                             Schlechtweg-
dämpfungsbedarf                     kenngröße

Aufbau-                             Schlechtweg-
dämpfungsbedarf                     Kenngröße
0...100%              5          7   0...100%

Berechnung
                    3
Gesamtdämpfungsbedarf

                    Gesamt-
8                   dämpfungsbedarf
                    0...100%

F i g.  1

EP 0 844 114 B1

Aufbaubeschleunigung / counts

$\sum = 26$

$\sum = 31$

$\sum = 27$

18 \ 0 4 0 4 7 0 0 0 0 0 4 0 7 0 0 0 0 0 0 0 0

19 \ 4 0 4 7 0 0 0 0 0 4 0 7 0 0 0 0 0 0 0 5

20 \ 0 4 7 0 0 0 0 0 4 0 7 0 0 0 0 0 0 0 5 0

# Fig. 2

# F i g. 3 a

# F i g.  3 b